# EUROPEAN PATENT APPLICATION

(11) **EP 1 926 171 A1**
(43) Date of publication of application: **28.05.2008**
(21) Application number: 06425793.4
(22) Date of filing: 22.11.2006
(51) Int. Cl.: H01M 8/14, H01M 8/00, H01M 8/06

(54) **Method and apparatus for integrating a liquid fuel processor and a fuel cell through dual reforming and a gas turbine**

(71) Applicant: Technip KTI S.p.A., 00148 Rome (IT)
(72) Inventor: Iaquaniello, Gaetano, 00148 Roma (IT)
(74) Representative: Sarpi, Maurizio

(57) **Abstract**

In the autothermal reforming (ATR) of a liquid fuel processor (LFP), a partially reformed syngas is produced, using a liquid hydrocarbon, marine diesel or automotive diesel for instance, and water vapour as reactants. Such a partially reformed feed is routed to a steam reformer (SR) to complete the reforming reactions. The SR is located inside the MCFC to better use the heat developed there. Syngas is fed to the MCFC to produce electrical energy meanwhile exhaust stream and unreacted hydrogen is routed to the combustion chamber of a gas turbine.
In such a combustion chamber, diesel feed may also be burned, hot gases are then expanded in the turbine to produce mechanical work and the power, meanwhile the exaust gases at the outlet of the gas turbine are used to preheat the process air, to generate and superheat the process heat to be used in the ATR/SM.
Thus, the apparatus and method of the present invention advantageously uses products generated in the apparatus to enhance the overall power generation efficiency of the apparatus.

## Description

The present invention provides a method and apparatus for efficiently integrate a liquid fuel processor (LFP) to a molten carbonate fuel cell (MCFC) through the use of a dual step reforming and a gas turbine.

The method and apparatus of the present invention produces electrical energy with an efficiency up to 55-60% as result of such integration or hybridation.

According to the invention, in the autothermal reforming (ATR) of LFP, a partially reformed syngas is produced, using a liquid hydrocarbon, marine diesel or automotive diesel for instance, and water vapour as reactans. Such a partially reformed feed is routed to a steam reformer (SR) to complete the reforming reactions. The SR is located inside the MCFC to better use the heat developed thereon. Syngas is fed to the MCFC to produce electrical energy meanwhile exhaust stream and unreacted hydrogen is routed to the combustion chamber of a gas turbine.

In such a combustion chamber, diesel feed may also be burned, hot gases are then expanded in the turbine to produce mechanical work and the power, meanwhile the exaust gases at the outlet of the gas turbine are used to preheat the process air, to generate and superheat the process heat to be used in the ATR/SM.

Thus, the apparatus and method of the present invention advantageously uses products generated in the apparatus to enhance the overall power generation efficiency of the apparatus.

### DESCRIPTION

### Field of invention

The present invention relates to a method and apparatus to efficiently integrate a liquid feed fuel cell processor (LFP) and a molten carbonate fuel cell (MCFC) through the use of a dual step reforming and a gas turbine. Such hybrid system (ATR/SM+MCFC+GT) allows to raising the overall efficiency in the range of 55-60% with a liquid hydrocarbon feed.

### Background of the invention

The integration of direct carbonate fuel cell, internally reformed carbonate fuel cell or MCFC with gas turbine is an emergent technology. The impetus for the integration is particularly important for the large scale power plant where the combined cycles are approaching the 55% and even higher efficient marks.

Liquid hydrocarbons feed is gaining interest not only for rural stationary application, but also for waterborne application.

Then, there is a need in the art for a method and apparatus to better integrate LFP, MCFC and GT. Particularly, there is a need to more efficiently use the products, heat and energy generated from MCFC and to improve operation and start-up mode.

The present invention seeks to solve these and other needs in the art.

### Summary of invention

The present invention provides an efficient method and apparatus, based on dual reforming ATR/SM of liquid hydrocarbons, for producing electrical energy in a hybrid system based on ATR/SM+MCFC+GT.

The method and apparatus of the present invention uses the products and the associated energy and heat produced from the apparatus.

Recently catalytic autothermal, multi-fuel processors have been developed for fuel cell electric vehicle applications. For instance, a fuel processor of McDermott Technology, Inc. and Catalytica Advanced Technologies, consists of the following components:
liquid fuel desulphurizer, autothermal reforming reactor, high-temperature and low-temperature shift reactors, CO selective oxidation reactor, and
associated pumps, compressor/expander, heat exchangers and controls.

According to the present invention, an hybrid apparatus to integrate a liquid feed fuel cell processor LFP to a molten carbonate fuel cell MCFC, includes :
- a ATR reactor, which is a component of the liquid fuel processor LFP, having a reforming zone and a final desulphurisation zone downstream according to European Patent Application No.04425745.9;
- a SM reactor placed inside the MCFC;
- a MCFC fed by the syngas produced by the ATR/SM;
- a GT where MCFC exhaust stream and unreacted hydrogen and/or liquid feed are burned;
- a waste heat recovery (WHR) section downstream the GT for transferring a large portion of GT exhaust to preheat process streams.

The present invention also provides a method for starting-up the apparatus by providing the initial streams heating via the gas turbine.

The invention will now be supported by example and figure which in no way will be limiting for the scope of protection defined by the attached claims.

### Brief description of the drawing.

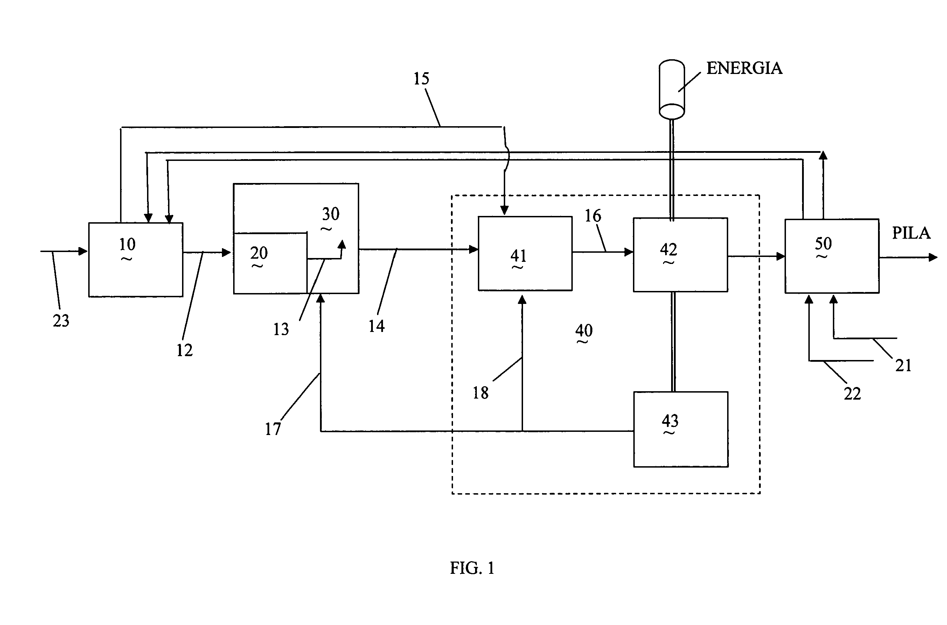

Figure 1 shows a schematic representation of an embodiment of the integrated hybrid apparatus of the present invention.

### Detailed Description of the invention

The present invention relates to a integrated hybrid apparatus (ATR/SM+MCFC+GT) to produce electrical energy with high efficiency. " Hybrid " means that two different devices ATR and SM for feed reforming and MCFC and GT for energy production are both used in the apparatus. By "integrated" it is meant that products and heat from the apparatus, as the off-gas and heat from MCFC and exhaust gases from GT, are recycled back to the apparatus for a more efficient operation.

Referring to fig.1, the integrated hybrid apparatus includes a liquid fuel processor (LFP) 10, a SM 20, a MCFC 30, a gas turbine (GT) 40 and WHR section 50. The GT consists of a dual firing combustor 41, an expander 42 and air compressor 43.

The LFP 10 has an inlet 11, and outlet 12. The LFP consists of at least two reactors and one exchanger: the ATR to catalitically pre-reform the liquid feed into a mixture of CO, H2, CH4 and lighter hydrocarbons and a ZnO bed to remove the H2S. The exchanger allows to proper control the temperature at the inlet of ZnO bed. Inlet 11 is a mixture of process air, superheated steam and vaporised feed.

The ATR reforming reaction uses a preferably wash-coated monolithic matrix as support of the reforming catalyst, but different types of supports, as pellets or solid foam, can also be used. The SM section 20 is preferably made by corrugated plates. On one side of such plates reforming catalyst is coated. The plates are assembled together forming alternate zones where the syngas or the heat medium flow.

Suitable reforming catalysts include any catalyst that can effectively promote the reformation reaction. Preferred reforming catalysts are not susceptible to poisoning under reforming reaction conditions and are tolerant of temperature changes that could occur during the start-up of the system. Such reforming catalysts are also preferable resistant to coking. Suitable reforming catalysts include for example supported noble metals or nickel-based catalysts or combination thereof.

Suitable desulphurisation catalysts include any adsorbent that can effectively remove H2S from the syngas. Preferred medium is stabilised zinc oxide able to work at 350-500°C.

The ATR/SM dual reforming apparatus works at a pressure of at least 5 barg, high enough to deliver the syngas to the MCFC section which operates at 4 barg. The composition of reformate stream 13 will depend on the dual reforming reactions conditions such as steam to feed carbon ratio, and air to feed ratio. Preferably the reformate streams contains about 27-35% mole of hydrogen, 5-8% of carbon monoxide, 10-15% of carbon dioxide, 15-23% of nitrogen and 0.5% mole of methane, with the balance being primarily water vapour.

The gaseous reformate stream 13 is then fed to the MCFC 30, anode side. At the cathode side of the cell, hydrogen ions are reacted with an air stream 17 supplied by the air compressor 43. The fuel cell exhaust 14 is then directed to the combustion chamber of the gas turbine 41 together with the supplemental fuel 15 which is set by the flue gas temperature in front of the WHR section 50. Due to the high content of water vapour in 14, combustion temperature is limited and NOₓ formation depressed. Hot flue gas 16, at a pressure of 3.5 barg and temperature of 650-700 °C enters the turbine expanders 42, to produce mechanical work and lower the temperature to 650-700°C. Mechanical work is used to move the air compressor 43 and to produce power. Compressed air is used in the MCFC, stream 17 and in GT, stream 18. Exhaust gases from 42 are routed to the WHR section 50, where the gases are cooled down to 250°C before being released through the stack.

Heat recovered in 50 is recycled back to the apparatus by vaporising BFW (boiler feed water) stream 21, preheating process air 22, and vaporising liquid feed 23. Air to MCFC, stream 17, could also be preheated.

The overall efficiency of the integrated hybrid apparatus is shown in table 1, based on preliminary efficiencies calculated for each sub-system.

## Claims

1. A method for efficiently integrate a liquid fuel processor (LFP), a molten carbonate fuel cell (MCFC) and a gas turbine comprising the steps of:
a) producing a partially reformed syngas in the autothermal reformer ATR of the liquid fuel processor LFP, using a liquid hydrocarbon, marine diesel or automotive diesel and water vapour as reactans;
b) routing such a partially reformed feed to a steam reformer (SM) to complete the reforming reactions to produce a mixture of H2 and CO (syngas);
c) feeding the syngas to the MCFC to produce electrical energy;
d) routing exhaust stream and unreacted hydrogen from MCFC and/or a liquid hydrocarbons feed to the combustion chamber of a gas turbine;
e) expanding the combustion gas stream from the combustion chamber in the gas turbine to produce mechanical work and the power, the exaust gases at the outlet of the gas turbine being used to preheat the process air, to generate and superheat the process heat to be used in the ATR/SM.

2. The method of claim 1 where the step a) is acting as a pre-reformer step converting the liquid hydrocarbons into a mixture of H2, CO, CH4 and lighter hydrocarbons by lowering the ATR outlet temperature and where the ATR catalyst is selected from the group of noble metals.

3. The method of claim 1 where the SM is completing the reforming reactions using the heat generated by the MCFC.

4. The method of claim 1 where the ATR/SM dual reforming system works at a pressure of at least 5 barg, high enough to deliver the syngas to the MCFC section which operates at 4 barg.

5. The method of claim 1 where a dual firing combustion is foreseen in the gas turbine at a pressure slightly less than that one of the MCFC, i.e 3.5-4 barg up to 6-8 barg.

6. The method of claims 1 where the gas turbine energy production is used partially to operate the air compressor and partially to produce power.

7. The method of claims 5 where the MCFC energy production and the one from the gas turbine are able to supply such electrical energy to a stationary or mobile structure as a ship, with an overall efficiency in the range of 55-60%.

8. The method of claim 4 where the flexibility in dual firing makes ease the start-up of the system.

9. The method of claim 6 where the combustion temperature in the combustion chamber of the gas turbine is controlled by the presence of water vapour from the fuel cell exhaust stream.

10. The method of claim 6 where NOₓ produced in the combustion is very low providing an integrated power system with almost zero NOₓ content in the flue gas.

11. An integrated hybrid apparatus to produce electrical energy with high efficiency through the use of a liquid fuel processor (LFP), a molten carbonate fuel cell (MCFC) and a gas turbine (GT), **characterized by** the fact that it comprises:
- a dual reforming system (ATR+SM) where liquid hydrocarbons and steam are reacted over a reforming catalysts to produce a mixture of H2 and CO (syngas)
- a MCFC having a first inlet for receiving the syngas mixture, a second inlet receiving the air and outlet for removing the fuel cell exhaust gases;
- a gas turbine GT whose combustion chamber is fed by the hot and pressurised gases from MCFC and in case by the liquid hydrocarbons, the air compressor for such turbine being also used to provide air to the MCFC;
- a waste heat boiler WHR, where the exhaust from the gas turbine are used to vaporise the boiler feed water (BFW) and superheat the steam at least about 450°C, to preheat the process air to ATR at the same temperature and the air flow to the MCFC at 250-300°C.

12. The apparatus of claim 11 where said dual reforming system comprises an autothermal reformer ATR, which is a component of LFP, and a steam reformer SM.

13. The apparatus of claim 11 where the ATR is acting as a pre-reformer converting the liquid hydrocarbons into a mixture of H₂, CO, CH₄ and lighter hydrocarbons by lowering the ATR outlet temperature and where the ATR catalyst is selected from the group of noble metals or nickel-based catalysts or combination thereof.

14. The apparatus of claim 12 where the ATR is completing the reforming reactions using the heat generated by the MCFC.

15. The apparatus of claim 12 where the steam reformer SM is placed inside the MCFC to better use the heat developed there.

16. The apparatus of claim 11 where a dual firing combustion is foreseen in the gas turbine at a pressure slightly less than that one of the MCFC, i.e 3.5-4 bar g up to 6-8 barg.

17. The apparatus of claim 11 where the combustion gas stream from the combustion chamber is expended to release energy and the energy is used partially to operate the air compressor and partially to produce power.

18. The apparatus of claim 11 where the MCFC energy production and the one from the gas turbine are able to supply such electrical energy to a stationary or mobile structure as a ship, with an overall efficiency in the range of 55-60%.

19. The apparatus of claim 11 where the flexibility in dual firing makes ease the start-up of the system.

20. The apparatus of claim 11 where the combustion temperature in the combustion chamber of the gas turbine is controlled by the presence of water vapour from the fuel cell exhaust stream, NOₓ produced in the combustion being then very low providing a integrated power system with almost zero NO, content in the flue gas.

21. The apparatus of claim 11 where the gas turbine GT consists of a dual firing combustor (41), an expander (42) and an air compressor (43).

22. The apparatus of claim 11 where the LFP comprises at least two reactors and one exchanger, said reactors being the autothermal reactor ATR to catalitically pre-reform the liquid feed into a mixture of CO,H₂ , CH₄ and lighter hydrocarbons, and a ZnO bed to remove the H₂S.

23. The apparatus of claim 22 where said exchanger allows to properly control the temperature at the inlet of ZnO bed.

24. The apparatus of claim 11, where the ATR reformer uses a wash-coated monolithic matrix as support of the reforming catalyst.

25. The apparatus of claim 11 where the steam reformer SM is made of corrugated plates.
